Europäisches Patentamt

European Patent Office

Office européen des brevets

(11) Numéro de publication: **0 398 777**
**A1**

## (12) DEMANDE DE BREVET EUROPEEN

(21) Numéro de dépôt: 90401177.2

(22) Date de dépôt: 30.04.90

(51) Int. Cl.⁵: **F27D 1/10, F16L 59/147**

(30) Priorité: 02.05.89 FR 8905800

(43) Date de publication de la demande:
**22.11.90 Bulletin 90/47**

(84) Etats contractants désignés:
**AT BE CH DE DK ES FR GB GR IT LI LU NL SE**

(71) Demandeur: **CARBO SPRAY**
**9 rue de la Porte de Fourqueux**
**F-78112 Fourqueux(FR)**

Demandeur: **SOCIETE D'ENTREPRISES ET DE**
**FUMISTERIE INDUSTRIELLE**
**Quartier des Fouitades**
**F-13340 Rognac(FR)**

(72) Inventeur: **Prop, Michel**
**15 Allée des 4 Coins**
**F-91190 Gif Sur Yvette(FR)**
Inventeur: **Du Pouget, François**
**8 Alfred Duvigny**
**F-75008 Paris(FR)**
Inventeur: **Hazera, Patrick**
**7 rue Lekain**
**F-75016 Paris(FR)**

(74) Mandataire: **Bloch, Gérard et al**
**2, square de l'Avenue du Bois**
**F-75116 Paris(FR)**

(54) **Procédé d'isolation d'une enceinte thermique et enceinte ainsi isolée.**

(57) Selon le procédé, on projette par voie pneumatique, d'abord sur la paroi interne (1) de l'enceinte thermique, un isolant fibreux léger (7) et ensuite, sur la couche d'isolant continue et sans joint (7), ainsi obtenue, un matériau réfractaire lourd (9) qui vient en prise sur des moyens d'ancrage (3) fixés à la paroi (1). Le matériau réfractaire (9) est fabriqué par voie sèche et mouillé juste avant d'être projeté.

FIG.3

EP 0 398 777 A1

L'invention concerne tout d'abord un procédé d'isolation d'une enceinte thermique, dans lequel on projette sur la paroi interne de l'enceinte un matériau réfractaire lourd et un isolant fibreux léger.

Au sens de l'invention, il faut entendre par enceinte thermique aussi bien un four - comme un four de plateforme sidérurgique, pétrochimique, un four d'incinération qu'une cheminée ou un carneau, par exemple.

Comme matériau réfractaire lourd, on peut considérer le béton réfractaire, la brique, ou tout autre enduit réfractaire. Sa fonction est double : c'est à la fois une résistance thermique et une résistance mécanique.

Comme isolant fibreux léger, on peut considérer des fibres céramiques, minérales, de verre. Il n'a qu'une fonction d'isolation.

On connait déjà un procédé du type mentionné ci-dessus, notamment par le document US-A-4 664 969, dans lequel on projette sur la paroi interne de l'enceinte thermique d'abord le matériau réfractaire lourd et ensuite l'isolant fibreux léger. Mais il n'est pas satisfaisant que ce soit la couche isolante qui constitue la couche interne de l'enceinte d'autant plus que cela anéantit la fonction de la couche réfractaire.

Un procédé plus ancien était aussi connu, datant de plusieurs dizaines d'années, dans lequel on fixait à la paroi interne de l'enceinte thermique, par collage ou embrochement, des panneaux rigides ou semi-rigides en matériau isolant et léger, fibreux ou non, avant, par exemple, de projeter sur les panneaux le matériau réfractaire lourd. Ce procédé, qui offrait l'avantage d'une surface interne mécaniquement résistante, présentait néanmoins deux inconvénients liés à la durée du temps de pose des panneaux d'isolant et à la présence de joints dans la couche d'isolant.

Un autre procédé encore, enseigné par le document US-A-3 587 198, prévoit de projeter un matériau réfractaire lourd sur une couche isolante préalablement projetée sur la paroi interne à isoler. Dans ce procédé, la couche d'isolation est une couche de béton isolant à prise hydraulique ("castable"), constituée, par exemple, d'agrégats isolants de type vermiculite et de ciment réfractaire. Mais ce procédé présente aussi des inconvénients. L'isolation n'est pas satisfaisante. Le poids de la couche isolante est relativement élevé. Enfin, la paroi d'une enceinte thermique étant généralement en acier, donc en matériau dur, comme la couche isolante et la couche réfractaire de ce procédé du document US-A-3 587 198, les différences de dilatation de la paroi à isoler et des couches isolante et réfractaire peuvent provoquer des fissures dans les deux couches. C'est d'ailleurs un inconvénient qui peut surgir à la suite de la mise en oeuvre du procédé du document US-A-4 664 969.

La présente invention vise à éliminer les inconvénients des procédés antérieurs.

A cet effet, la présente invention concerne un procédé du type mentionné ci-dessus, caractérisé par le fait qu'on projette sur la paroi interne de l'enceinte thermique d'abord l'isolant fibreux léger sur lequel on projette ensuite le matériau réfractaire lourd.

L'invention est donc déjà remarquable pour avoir vaincu l'interdit de la projection d'un matériau lourd sur un matériau léger, fibreux et projeté. D'ailleurs, ce préjugé était tellement fort que, pour pallier les inconvénients des joints entre les panneaux d'isolant, il avait été proposé, dans le document US-A-3 587 198, de projeter le matériau isolant directement sur la paroi de l'enceinte thermique. Mais les promoteurs d'un tel perfectionnement s'étaient bien gardés d'aller plus loin et de proposer de projeter le matériau réfractaire sur un isolant fibreux léger et lui-même projeté, donc sans joints.

L'invention est également remarquable par le fait que, le matériau réfractaire lourd étant parfaitement isolé de la paroi de l'enceinte thermique, les seules fissures qui peuvent apparaître sont celles dues au matériau réfractaire lui-même et que, au pire, ces éventuelles fissures sont petites et régulièrement réparties en surface.

L'invention est surtout remarquable pour apporter une bonne solution à un vieux problème sur lequel tous les spécialistes se sont toujours penchés et notamment les fabricants de fibres isolantes qui les proposent depuis que ce problème d'isolation d'enceinte thermique existe.

Dans une mise en oeuvre préférée du procédé de l'invention, on fixe au préalable à la paroi de l'enceinte thermique des moyens d'ancrage sur lesquels le matériau réfractaire, après sa projection, vient en prise. Dans ce cas, tout risque de décollement de la couche de matériau réfractaire est parfaitement éliminé.

Avantageusement, on fabrique le matériau réfractaire par voie sèche et on le mouille juste avant de le projeter.

De préférence encore, après avoir projeté l'isolant fibreux, on applique sur la couche d'isolant ainsi obtenue un film d'étanchéité pour éviter, juste après la projection du matériau réfractaire, la déshydratation trop rapide de celui-ci.

Enfin, de façon préférée toujours, on projette l'isolant et le matériau réfractaire par voie pneumatique.

L'invention concerne également l'enceinte thermique isolée selon le procédé de l'invention, comprenant, sur sa paroi interne, une couche d'un matériau réfractaire lourd et une couche d'un isolant fibreux léger, caractérisée par le fait que la couche d'isolant est disposés entre la paroi de l'enceinte et la couche réfractaire et c'est une couche continue et sans joint.

L'invention sera mieux comprise à l'aide de la description suivante de la mise en oeuvre préférée du procédé de l'invention et de l'enceinte isolée conformément à ce procédé, en référence aux dessins annexés sur lesquels

- la figure 1 est une vue en coupe de la paroi de l'enceinte avant projection des couches isolante et réfractaire mais après fixation des moyens d'ancrage de la couche réfractaire;

- la figure 2 est une vue en coupe de la paroi de l'enceinte de la figure 1, après projection de la couche isolante;

- la figure 3 est une vue en coupe de la paroi de l'enceinte de la figure 2, après projection de la couche réfractaire:

- la figure 4 est une vue schématique par blocs de l'appareil de projection de la couche isolante et

- la figure 5 est une vue schématique par blocs de l'appareil de projection de la couche réfractaire.

On considérera comme enceinte thermique, mais à titre nullement limitatif, un four à paroi métallique 1, ici en acier. On notera d'emblée que le procédé de l'invention s'applique très bien à des enceintes dans lesquelles un opérateur humain peut pénétrer, mais il ne s'agit pas non plus d'une limitation de l'invention. Enfin, et toujours à titre liminaire, on considérera, comme matériau réfractaire, du béton réfractaire, bien qu'il ne s'agisse pas davantage d'une caractéristique nécessaire de l'invention.

On commence par souder, sur la face interne 2 de la paroi du four, des fers d'ancrage 3, en forme de U retourné, dont les branches 5, 6 ont une longueur inférieure à la somme des épaisseurs des deux couches qui vont être projetées sur la paroi. C'est par leur traverse 4, réunissant leurs branches, que les fers 3 sont soudés.

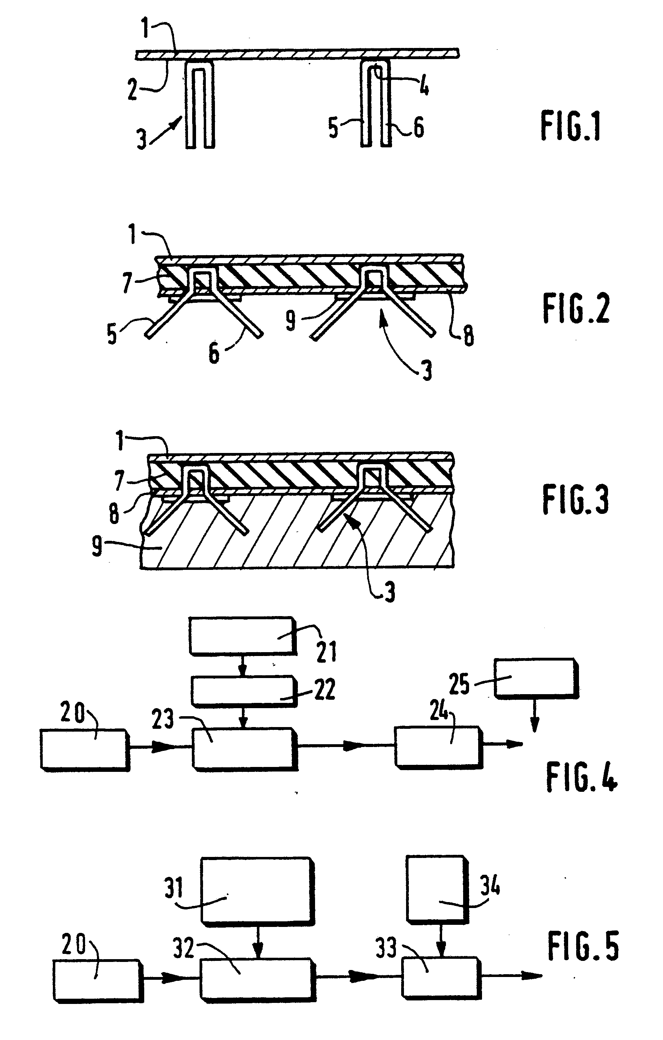

On projette ensuite sur la face 2 de la paroi 1 du four un isolant fibreux léger pour former une couche 7 isolante et sans joint. On applique ensuite, sur la couche 7, et à travers les fers d'ancrage 3, un film d'étanchéité 8, dont le caractère imperméable à l'eau évitera la déshydratation trop rapide du béton qui va être projeté. On passe autour des branches des fers d'ancrage des rondelles 9 et on écarte l'une de l'autre les branches 5, 6 des fers 3, pour fixer les rondelles 9, bien maintenir la couche isolante 7 et améliorer l'ancrage de la couche réfractaire qui va donc être projetée (figure 2). Puis on projette sur le film 8 le béton réfractaire. Après une prise relativement rapide du béton, car faiblement mouillé, il se forme une couche 10 bien ancrée sur les fers en U déformés 3.

La projection de l'isolant et du béton réfractaire s'effectue, par la voie pneumatique, par air comprimé par un compresseur 20. L'isolant fibreux, dépourvu de liant, est stocké en vrac dans une cuve, ou trémie, 21 qui débouche, par une chambre de cardage 22, pour étirer et aérer les fibres, dans un barillet de distribution 23 faisant fonction de doseur. Le barillet est raccordé, en amont, au compresseur 20 et, en aval, par l'intermédiaire d'un tuyau, à un canon de projection 24. Le mouillage de l'isolant s'effectue à la sortie du canon 24, par projection d'un brouillard, par exemple à l'aide d'un pulvérisateur 25. Pour la projection de la couche réfractaire, on procède à l'aide d'un appareil similaire. On remplit sa trémie de stockage 31 de béton réfractaire fabriqué par voie sèche, sans bétonnière, et non vibré. La trémie 31 débouche directement dans un barillet de distribution 32, relié, en amont, au compresseur 20 et, en aval, par l'intermédiaire d'un tuyau de transport, à un canon de projection 33 également relié, pour l'application du béton, à une source d'eau sous pression 34, pour mouiller le béton juste avant qu'il ne soit projeté. Le canon 33 sert dans cette étape du procédé de chambre de mélange. Compte tenu du faible mouillage du béton, par exemple à 15 %, sa prise est relativement rapide.

On soulignera ici que, de façon surprenante, la couche isolante en matériau fibreux se projette très bien en plafond et supporte tout aussi bien le poids de la couche réfractaire lourde.

## Revendications

1. Procédé d'isolation d'une enceinte thermique, dans lequel on projette sur la paroi interne (1) de l'enceinte un matériau réfractaire lourd et un isolant fibreux léger, caractérisé par le fait qu'on projette sur la paroi interne (1) de l'enceinte thermique d'abord l'isolant fibreux léger (7) sur lequel on projette ensuite le matériau réfractaire lourd (9).

2. Procédé selon la revendication 1, dans lequel on fixe au préalable à la paroi (1) de l'enceinte thermique des moyens d'ancrage (3) sur lesquels le matériau réfractaire (9), après sa projection, vient en prise.

3. Procédé selon l'une des revendications 1 et 2, dans lequel on fabrique le matériau réfractaire (9) par voie sèche et on le mouille (24, 23) juste avant de le projeter.

4. Procédé selon l'une des revendications 1 à 3, dans lequel, après avoir projeté l'isolant fibreux, on applique sur la couche d'isolant (7) ainsi obtenue un film d'étanchéité (8) pour éviter, juste après la projection ou matériau réfractaire (9), la déshydratation trop rapide de celui-ci.

5. Procédé selon l'une des revendications 1 à 4. dans lequel on projette l'isolant (7) et le matériau réfractaire (9) par voie pneumatique (20).

6. Enceinte thermique isolée selon le procédé de la revendication 1, comprenant, sur sa paroi interne (1), une couche (9) d'un matériau réfractaire lourd et une couche (7) d'un isolant fibreux léger, caractérisé par le fait que la couche d'isolant (7) est disposée entre la paroi (1) de l'enceinte et la couche réfractaire (9) et c'est une couche continue et sans joint.

7. Enceinte thermique selon la revendication 6, dans laquelle la couche réfractaire (9) est ancrée sur des moyens d'ancrage (3) fixés à la paroi (1) de l'enceinte.

8. Enceinte thermique selon l'une des revendications 6 et 7, dans laquelle un fiim d'étanchéité (8) est interposé entre la couche isolante (7) et la couche réfractaire (9).

FIG.1

FIG.2

FIG.3

FIG.4

FIG.5

Office européen
des brevets

# RAPPORT DE RECHERCHE EUROPEENNE

Numero de la demande

EP    90 40 1177

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3587198 (W.C.HENSEL) <br> * abrégé; revendications ; figure 3 * <br> --- | 1, 2, 6, <br> 7 | F27D1/10 <br> F16L59/147 |
| A | US-A-4664969 (ROSSI ET AL.) <br> * abrégé; figures * <br> --- | 1, 5, 6 | |
| A | DE-A-1807001 (SVENSKA SILIKA GMBH) <br> * page 2, alinéa 3 - page 3, alinéa 1; figures * <br> ----- | 4, 8 | |

DOMAINES TECHNIQUES
RECHERCHES (Int. Cl.5 )

F16L
F27D

Le présent rapport a été établi pour toutes les revendications

| Lieu de la recherche | Date d'achèvement de la recherche | Examinateur |
|---|---|---|
| LA HAYE | 04 SEPTEMBRE 1990 | BARTSCH A.W. |